# EUROPEAN PATENT SPECIFICATION

(11) **EP 3 388 339 B1**
(45) Date of publication and mention of the grant of the patent: **01.04.2020**
(21) Application number: 18168483.8
(22) Date of filing: 18.12.2015
(51) Int. Cl.: B64D 11/00, B64D 13/00, F16L 3/223, H02G 3/30

(54) **DUCT ASSEMBLY AND METHOD OF ASSEMBLING THEREOF**
KANALANORDNUNG UND VERFAHREN ZUR MONTAGE DAVON
ENSEMBLE DE CONDUIT ET SON PROCÉDÉ D'ASSEMBLAGE

(30) Priority: 10.03.2015 US 201514643680
(43) Date of publication of application: 17.10.2018
(62) Divisional of application: 15201003.9
(73) Proprietor: The Boeing Company, Chicago, IL 60606-1596 (US)
(72) Inventor: Vu, Vinh Q., Chicago, IL 60606-2016 (US); Barry, Theodore M., Chicago, IL 60606-2016 (US); Snyder, William J., Chicago, IL 60606-2016 (US); Rand, John C., Chicago, IL 60606-2016 (US)
(74) Representative: Witte, Weller & Partner Patentanwälte mbB

(56) References cited:
- EP-A1- 0 412 067
- WO-A2-2012/084204
- DE-A1-102007 060 030
- DE-A1-102012 001 797
- US-A- 2 396 925
- US-A- 5 703 330
- US-A1- 2004 113 027
- US-A1- 2014 014 775

## Description

### BACKGROUND

The field of the present disclosure relates generally to duct assemblies and, more specifically, to a centralized and modular duct assembly for installation in a vehicle, for example.

At least some known aircraft include a series of ducts positioned within a fuselage of the aircraft. The ducts serve a variety of functions that include, but are not limited to, liquid distribution, conditioned air distribution, lavatory and galley ventilation, waste heat recovery from electrical systems in the aircraft, and housing for electrical wiring. The ducts are positioned within a crown portion of the aircraft fuselage, and are individually attached to a structural member of the aircraft with a series of brackets. Moreover, the ducts are spread throughout a cross-section of the crown portion and generally include a plurality of bends that enable the ducts to be routed through limited space within the crown portion unoccupied by other systems of the aircraft. More specifically, the ducts extend between fore and aft sections of the fuselage along a generally non-linear path resulting in complex duct geometries to ensure each duct extends through interconnected open space in the crown portion of the fuselage. As such, the size of the duct and the number of brackets required to attach each duct to the structural member of the aircraft increases, which increases the cost and the weight of the aircraft. Moreover, installing individual ducts having a complex geometry can be a time consuming and laborious task.

DE 10 2012 001 797 A1 ist entitled system and method for mounting aircraft system components in the crown region of aircraft.

WO 2012/084204 is entitled aircraft system component carrier system and mounting method.

### BRIEF DESCRIPTION

In one aspect, a duct assembly for use in a vehicle is provided. The duct assembly includes a plurality of duct sub-assemblies coupled to each other in series. Each duct sub-assembly includes at least one bracket configured to couple to a structural member of the vehicle, and a plurality of duct portions coupled to the at least one bracket such that each duct sub-assembly forms a unitary bundle of duct portions, wherein the duct portions are sized such that fluid and/or electrical wiring is routable therethrough and are arranged such that open ends of duct portions in adjacent duct sub-assemblies are coplanarly aligned when the duct sub-assembly and the adjacent duct sub-assemblies are coupled together end-to-end.

In another aspect, a duct sub-assembly for use in a structure is provided. The duct sub-assembly includes at least one bracket configured to couple to a structural member of the structure, and a plurality of duct portions coupled to the at least one bracket such that each duct sub-assembly forms a unitary bundle of duct portions, wherein the duct portions are sized such that fluid and/or electrical wiring is routable therethrough and are arranged such that open ends of duct portions in adjacent duct sub-assemblies are coplanarly aligned when the duct sub-assembly and the adjacent duct sub-assemblies are coupled together end-to-end.

In yet another aspect, a method of assembling a duct assembly in a vehicle is provided. The duct assembly includes a plurality of duct sub-assemblies each having at least one bracket and a plurality of duct portions coupled to the at least one bracket such that each duct sub-assembly forms a unitary bundle of duct portions, wherein the duct portions are sized such that fluid and/or electrical wiring is routable therethrough and are arranged such that open ends of duct portions in adjacent duct sub-assemblies are coplanarly aligned when the duct sub-assembly and the adjacent duct sub-assemblies are coupled together end-to-end. The method includes coupling the at least one bracket of a first duct sub-assembly to a structural member of the vehicle, and coupling a second duct sub-assembly end-to-end with the first duct sub-assembly such that the plurality of duct portions in the first and second duct sub-assemblies are substantially aligned.

### BRIEF DESCRIPTION OF THE DRAWINGS

FIG. 1 is a schematic illustration of an exemplary aircraft.
FIG. 2 is a cross-sectional illustration of an exemplary aircraft fuselage.
FIG. 3 is a schematic sectional illustration of an exemplary duct assembly that may be used in the aircraft fuselage shown in FIG. 2.
FIG. 4 is a schematic illustration of an exemplary duct sub-assembly that may be used in the duct assembly shown in FIG. 3.
FIG. 5 is a schematic illustration of the duct sub-assembly shown in FIG. 4 taken along Line 5-5.
FIG. 6 is a schematic illustration of an exemplary mounting system that may be used with the duct sub-assembly shown in FIG. 4.

### DETAILED DESCRIPTION

The implementations described herein relate to systems and methods of assembling a duct assembly in a vehicle. More specifically, the duct assembly has a centralized and modular configuration that enables duct sub-assemblies to be formed outside of the vehicle for future installation in the vehicle. Each duct sub-assembly includes a common bracket for coupling to a structural member of the vehicle, and a plurality of duct portions coupled, either directly or indirectly, to the bracket such that a unitary bundle of duct portions is formed. When assembled in the vehicle, the duct sub-assemblies are coupled to each other in series such that duct portions of adjacent duct sub-assemblies substantially align to form continuous ducts of increasing length. Bundling the duct portions into separate duct sub-assemblies reduces the installation time for the duct assembly when compared to individually installing a similar number of duct portions as are in the duct sub-assemblies, and that do not share a common bracket. Moreover, centralizing the duct assembly facilitates ensuring space is allocated for the duct assembly in the vehicle, without having to route each duct through space unoccupied by other systems of the vehicle. As such, ducts formed from by the duct assembly described herein have a substantially linear orientation, which improves flow dynamics of fluid flowing through at least some of the ducts, and reduces the cost and the weight of the duct assembly when compared to individual ducts having complex geometries.

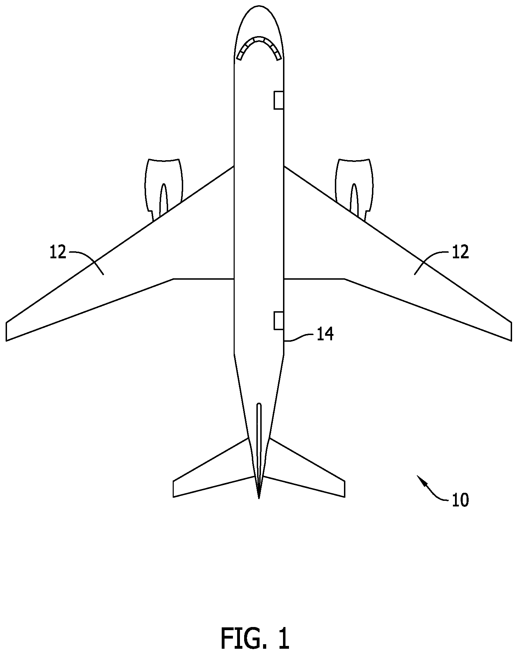

Referring to the drawings, implementations of the disclosure may be described in the context of an aircraft 10 shown schematically in FIG. 1. Aircraft 10 includes at least one wing 12 that extends from a fuselage 14. The plurality of structures shown on aircraft 10 is for illustrative purposes only, and it should be understood that aircraft 10 additionally includes a large number of other structures. As used herein, the term "aircraft" may include, but is not limited to only including, airplanes, unmanned aerial vehicles (UAVs), gliders, helicopters, and/or any other object that travels through airspace. Moreover, it should be understood that, although an aerospace example is shown, the principles of the disclosure may be applied to other structures, such as a maritime structure or an automotive structure.

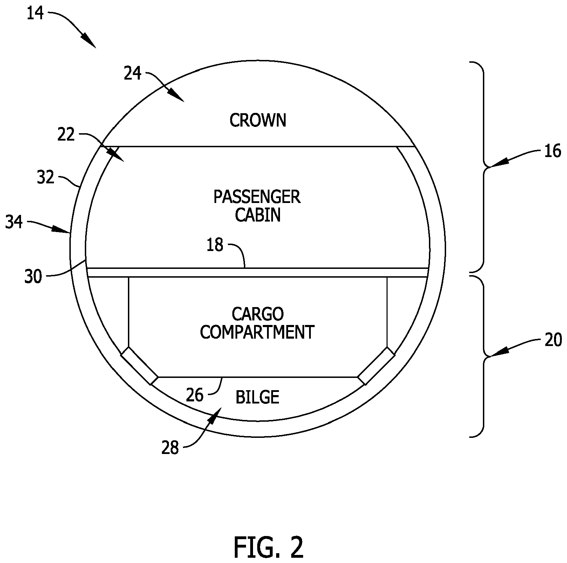

FIG. 2 is a cross-sectional illustration of fuselage 14 that may be used in aircraft 10 (shown in FIG. 1). In the exemplary implementation, fuselage 14 includes an upper lobe 16 located above a floor beam 18, and a lower lobe 20 located below floor beam 18. Upper lobe 16 includes a passenger cabin 22 and a crown portion 24, and lower lobe 20 includes a cargo compartment 26 and a bilge 28. Fuselage 14 also includes a passenger cabin side wall 30, an outer skin 32 that defines an external boundary (not shown) of fuselage 14, and a side wall volume 34 defined therebetween.

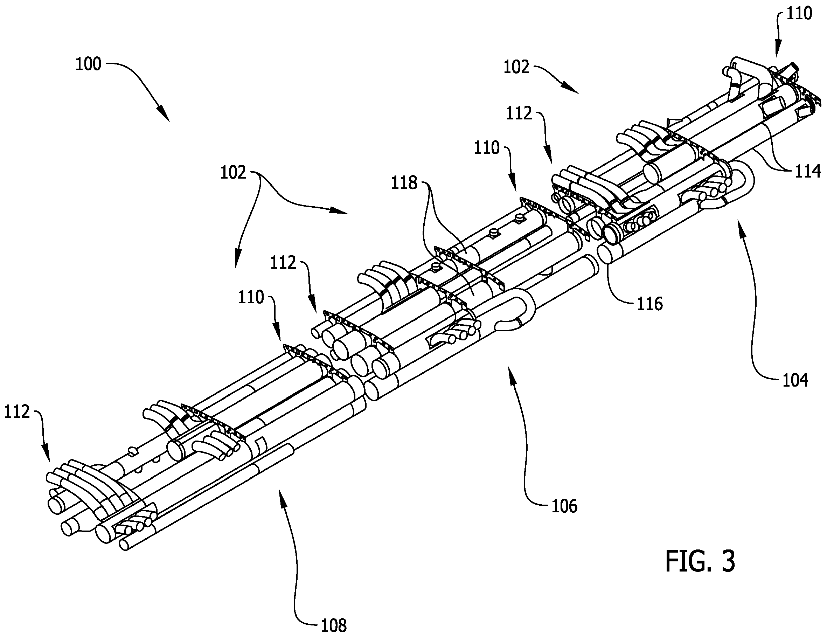

FIG. 3 is a schematic sectional illustration of an exemplary duct assembly 100 that may be used in fuselage 14 (shown in FIG. 2). In the exemplary implementation, duct assembly 100 is positioned within crown portion 24 of fuselage 14, and includes a plurality of duct sub-assemblies 102 coupled to each other in series. For example, duct assembly 100 includes a first duct sub-assembly 104, a second duct sub-assembly 106, and a third duct sub-assembly 108. Each duct sub-assembly 102 includes a first end 110 and a second end 112, and the plurality of duct sub-assemblies 102 are coupled together end-to-end such that duct assembly 100 extends along fuselage 14. More specifically, in the exemplary implementation, first end 110 of second duct sub-assembly 106 is coupled to second end 112 of first duct sub-assembly 104, and first end 110 of third duct sub-assembly 108 is coupled to second end 112 of second duct sub-assembly 106. Alternatively, while shown as including three duct sub-assemblies 102, any number of duct sub-assemblies 102 may be used to form duct assembly 100 that enables aircraft 10 to function as described herein.

As will be described in more detail below, each duct sub-assembly 102 includes a plurality of duct portions 114 that extend substantially parallel relative to each other in substantially linear configuration at least partially along a length of each duct sub-assembly 102. Duct portions 114 are sized such that fluid and/or electrical wiring can be routed therethrough. Moreover, duct portions 114 are arranged in each duct sub-assembly 102 such that open ends 116 of duct portions 114 in adjacent duct sub-assemblies 102 are substantially aligned when duct sub-assemblies 102 are coupled together end-to-end. As such, duct portions 114 in each duct sub-assembly 102 couple together to form ducts (not shown), and the length of the ducts is based on the number of duct sub-assemblies 102 in duct assembly 100.

In order to enable adjacent duct sub-assemblies 102 to substantially mate and form duct assembly 100, open ends 116 of each duct portion 114 are coplanarly aligned to facilitate installation of duct assembly 100 within aircraft 10, as will be described in more detail below.

In some implementations, at least one duct portion 114 in second duct sub-assembly 106 includes a removable portion 118 defined therein. Removable portion 118 can selectively uncouple from second duct sub-assembly 106 to allow access to an interior (not shown) of the at least one duct portion 114. As such, removable portion 118 enables maintenance to be performed on either the duct portions 114 themselves or on components routed through duct portions 114.

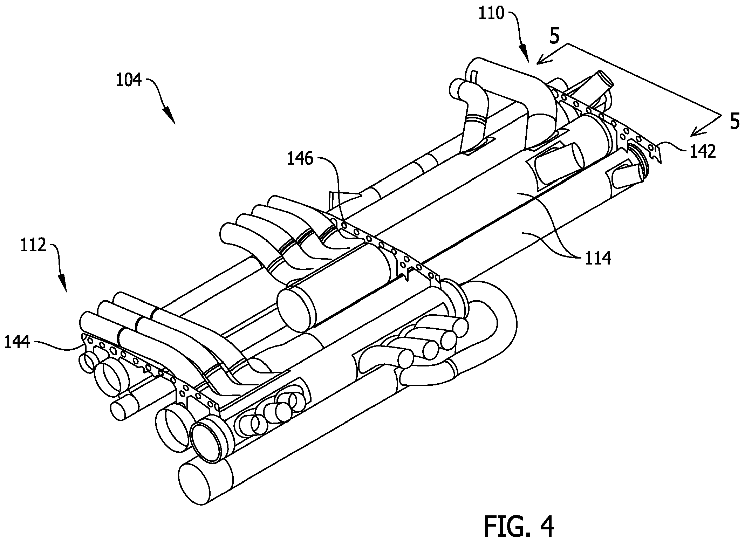

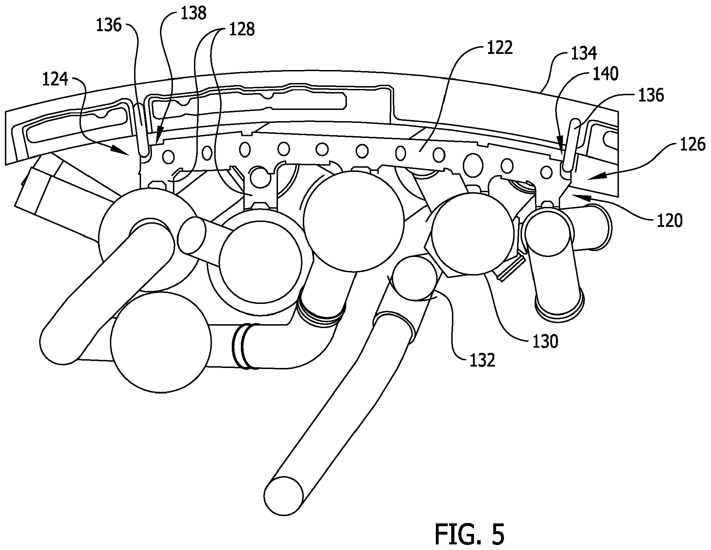

FIG. 4 is a schematic illustration of first duct sub-assembly 104 that may be used in duct assembly 100 (shown in FIG. 3), and FIG. 5 is a schematic illustration of first duct sub-assembly 104 taken along Line 5-5. In the exemplary implementation, first duct sub-assembly 104 includes at least one bracket 120, and a plurality of duct portions 114 coupled, either directly or indirectly, to bracket 120 such that first duct sub-assembly 104 forms a unitary bundle of duct portions. As such, as will be described in more detail below, grouping duct portions 114 into a unitary bundle with at least one common bracket 120 enables each duct sub-assembly 102 to be easily transportable and easily installable within aircraft 10. Moreover, while described in the context of first duct sub-assembly 104, it should be understood that the foregoing and following descriptions are likewise applicable to second and third duct sub-assemblies 106 and 108.

Referring to FIG. 5, bracket 120 includes a base portion 122 including a first end 124 and a second end 126, and a plurality of arm portions 128 extending from base portion 122 towards duct portions 114. Bracket 120 extends substantially transversely relative to duct portions 114 and, in one implementation, is coupled to only some of duct portions 114. More specifically, base portion 122 extends substantially transversely relative to duct portions 114, and a first duct portion 130 is coupled directly to bracket 120 via one of arm portions 128. A second duct portion 132 is coupled to first duct portion 130, and thus is coupled indirectly to bracket 120. As such, the unitary bundle of duct portions 114 is formed without having to directly couple each duct portion 114 to bracket 120.

Bracket 120 also includes a plurality of mounting holes that facilitate coupling first duct sub-assembly 104 to a structural member 134 of aircraft 10. For example, in one implementation, structural member 134 is embodied as a stringer that extends along outer skin 32 of fuselage 14 within crown portion 24 (each shown in FIG. 2). A coupling member 136 extends between structural member 134 and bracket 120 to couple first duct sub-assembly 104 to structural member 134. More specifically, bracket 120 includes a first mounting hole 138 at first end 124 of base portion 122, and a second mounting hole 140 at second end 126 of base portion 122. As will be described in more detail below, bracket 120 couples to coupling members 136 at first and second mounting holes 138 and 140 via at least one mounting pin (not shown in FIG. 5). The mounting pin enables bracket 120 to freely rotate thereabout when inserted through one of first and second mounting holes 138 and 140.

Moreover, referring to FIG. 4, first duct sub-assembly 104 includes a first bracket 142 at first end 110 of first duct sub-assembly 104, a second bracket 144 at second end 112 of first duct sub-assembly 104, and a third bracket 146 positioned between first and second ends 110 and 112 of first duct sub-assembly 104. As such, if each bracket 120 includes two mounting holes, first duct sub-assembly 104 can be coupled to structural member 134 at six mounting locations, at most, which is less than if each duct portion 114 were coupled to structural member 134 individually for duct assemblies including a similar number of duct portions 114 as first duct sub-assembly 104.

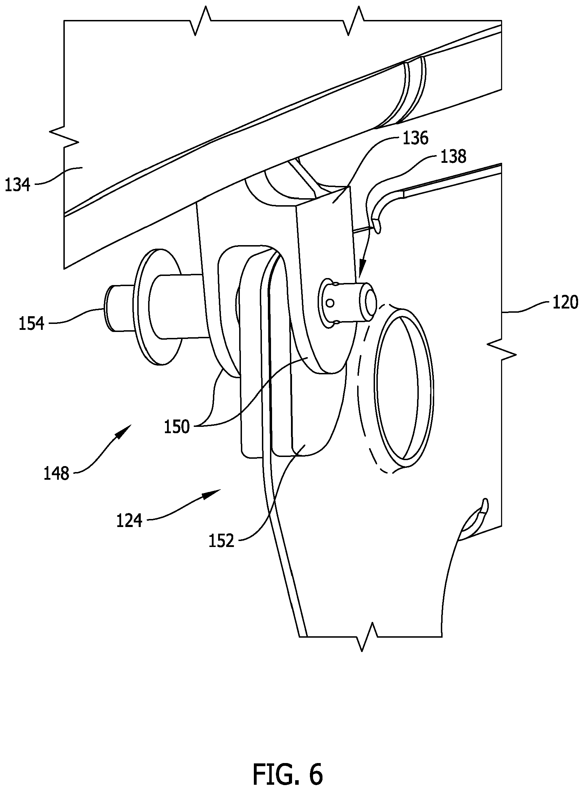

FIG. 6 is a schematic illustration of an exemplary mounting system 148 that may be used with first duct sub-assembly 104 (shown in FIG. 4). In the exemplary implementation, mounting system 148 includes coupling member 136, mounting hole 138 within bracket 120, and a mounting pin 154 sized to ensure coupling member 136 and bracket 120 remain coupled together via mounting hole 138. For example, in one implementation, mounting system 148 is embodied as a knuckle joint assembly, wherein coupling member 136 includes a double-eye configuration such that portions 150 of coupling member 136 are positioned on opposing sides of bracket 120. Holes 152 in portions 150 of coupling member 136 substantially align with mounting hole 138, and mounting pin 154 is sized for insertion through each of holes 152 and mounting hole 138. As such, bracket 120 is allowed to freely rotate about mounting pin 154 when bracket 120 is coupled to structural member 134 at only one of first and second ends 124 and 126.

A method of assembling duct assembly 100 in a vehicle, such as aircraft 10, is also described herein. The duct assembly includes a plurality of duct sub-assemblies 102 each having at least one bracket 120 and a plurality of duct portions 114 coupled to the at least one bracket 120 such that each duct sub-assembly 102 forms a unitary bundle of duct portions 114. The method includes coupling the at least one bracket 120 of a first duct sub-assembly, such as first duct sub-assembly 104, to a structural member of the vehicle. The method also includes coupling a second duct sub-assembly, such as second duct sub-assembly 106, end-to-end with the first duct sub-assembly such that the plurality of duct portions 114 in the first and second duct sub-assemblies are substantially aligned.

In some implementations, coupling the at least one bracket 120 includes coupling first end 124 of the at least one bracket 120 to the structural member, rotating the first duct sub-assembly about a mounting point defined at first end 124 such that a second end 126 of the at least one bracket is positioned adjacent to the structural member, and coupling second end 126 of the at least one bracket 120 to the structural member. Coupling the at least one bracket 120 also includes coupling the at least one bracket 120 to the structural member with mounting pin 154 such that the at least one bracket 120 is allowed to freely rotate about mounting pin 154. While described in the context of first duct sub-assembly, the foregoing description is applicable to any of duct sub-assemblies 102.

Coupling a second duct sub-assembly includes coupled the at least one bracket 120 of the second duct sub-assembly to another structural member of the vehicle.

In one implementation, the method further includes orienting the first and second duct sub-assemblies such that the plurality of duct portions 114 extend substantially linearly along a length of the vehicle. Moreover, the method includes sizing the first and second duct sub-assemblies to be positioned with crown portion 24 of aircraft 10.

The implementations described herein relate to systems and methods of assembling a duct assembly in a vehicle. More specifically, the duct assembly includes a plurality of duct sub-assemblies having a configuration that facilitates installation, and reduces the installation time, of the duct assembly in the vehicle. The duct sub-assemblies include duct portions bundled together with a common bracket to form a unitary structure for future installation in the vehicle. Bundling the duct portions reduces the installation time for the duct assembly when compared to individually installing a similar number of duct portions as are in the duct sub-assemblies, and that do not share a common bracket.

This written description uses examples to disclose various implementations, including the best mode, and also to enable any person skilled in the art to practice the various implementations, including making and using any devices or systems and performing any incorporated methods. The patentable scope of the disclosure is defined by the claims. Other examples may occur to those skilled in the art. Such other examples are intended to be within the scope of the claims if they have structural elements that do not differ from the language of the claims.

## Claims

1. A duct sub-assembly (102, 104, 106) for forming a duct assembly (100) to be used in a vehicle, said duct sub-assembly (102) comprising:
at least one bracket (120) configured to couple to a structural member (134) of the vehicle; and
a plurality of duct portions (114) coupled to said at least one bracket (120) such that each said duct sub-assembly (102) forms a unitary bundle of duct portions (114), wherein the duct portions (114) are sized such that fluid and/or electrical wiring is routable therethrough and are arranged such that open ends (116) of duct portions (114) in adjacent duct sub-assemblies (104, 106) are coplanarly aligned when the duct sub-assembly (102) and the adjacent duct sub-assemblies (104, 106) are coupled together end-to-end,
wherein the at least one bracket (120) includes a first bracket (142) at a first end (110) of the duct sub-assembly (102) and a second bracket (144) at a second opposing end (112) of the duct sub-assembly (102).

2. The duct sub-assembly (102) in accordance with Claim 1, wherein said at least one bracket (120) comprises a base portion (122) extending substantially transversely relative to said plurality of duct portions (114) and at least one arm portion (128) extending towards said plurality of duct portions.

3. The duct sub-assembly (102) in accordance with any one of Claims 1 to 2, wherein at least one duct portion (114) in said plurality of duct portions comprises a removable portion (118) configured to selectively uncouple from the duct sub-assembly.

4. The duct sub-assembly (102) in accordance with any one of Claims 1 to 3, wherein said plurality of duct portions (114) extend in a substantially parallel orientation relative to each other.

5. The duct sub-assembly (102) in accordance with any one of Claims 1 to 4, wherein said plurality of duct portions (114) comprises a first duct portion (130) coupled to said at least one bracket (120) and a second duct portion (132) coupled to said first duct portion (130).

6. The duct sub-assembly (100) in accordance with any one of Claims 1 to 5, wherein said at least one bracket (120) comprises at least one mounting hole (138, 140) sized to receive a mounting pin (154) therethrough, wherein preferably said at least one mounting hole comprises a first mounting hole (138) at a first end (124) of said at least one bracket (120) and a second mounting hole (140) at a second end (126) of said at least one bracket such that said at least one bracket is configured to freely rotate about said mounting pin (154) when inserted through one of said first and second mounting holes.

7. A duct assembly (100) for use in a vehicle, said duct assembly comprising a plurality of the duct sub-assemblies (102) of any one of Claims 1 to 6, the duct sub-assemblies end-to-end coupled to each other in series.

8. The duct assembly (100) in accordance with Claim 2, wherein each said duct sub-assembly (102) comprises the first end (110) and the second end (112) such that the first end of a first duct sub-assembly (104) is coupled to the second end of a second duct sub-assembly (106).

9. A method of assembling a duct assembly (100) in a vehicle, the duct assembly (100) including a plurality of duct sub-assemblies (102, 104, 106) each having at least one bracket (120), which includes a first bracket (142) at a first end (110) of the respective duct sub-assembly (102) and a second bracket (144) at a second opposing end (112) of the respective duct sub-assembly (102), and a plurality of duct portions (114) coupled to the at least one bracket such that each duct sub-assembly forms a unitary bundle of duct portions, wherein the duct portions (114) are sized such that fluid and/or electrical wiring is routable therethrough and are arranged such that open ends (116) of duct portions (114) in adjacent duct sub-assemblies (104, 106) are coplanarly aligned when the duct sub-assembly (102) and the adjacent duct sub-assemblies (104, 106) are coupled together end-to-end, said method comprising:
coupling the at least one bracket of a first duct sub-assembly (104) to a structural member (134) of the vehicle; and
coupling a second duct sub-assembly (106) end-to-end with the first duct sub-assembly such that the plurality of duct portions (114) in the first and second duct sub-assemblies are substantially aligned.

10. The method in accordance with Claim 9, wherein coupling the at least one bracket (120) comprises:
coupling a first end (124) of the at least one bracket to the structural member (134);
rotating the first duct sub-assembly (104) about a mounting point defined at the first end such that a second end (126) of the at least one bracket is positioned adjacent to the structural member; and
coupling the second end of the at least one bracket to the structural member.

11. The method in accordance with Claim 9 or 10, wherein coupling the at least one bracket (120) comprises coupling the at least one bracket to the structural member (134) with a mounting pin (154) such that the at least one bracket is allowed to freely rotate about the mounting pin.

12. The method in accordance with any one of Claims 9 to 11, wherein coupling a second duct sub-assembly (106) comprises coupling the at least one bracket (120) of the second duct sub-assembly to another structural member of the vehicle.

13. The method in accordance with any one of Claims 9 to 12 further comprising orienting the first and second duct sub-assemblies (104, 106) such that the plurality of duct portions (114) extend substantially linearly along a length of the vehicle.

## Patentansprüche

1. Kanalunteranordnung(102, 104, 106) zum Bilden einer Kanalanordnung (100), die in einem Fahrzeug zu verwenden ist, wobei die Kanalunteranordnung (102) aufweist:
zumindest einen Halter (120), der zum Koppeln an ein Strukturglied (134) des Fahrzeugs eingerichtet ist; und
eine Vielzahl von Kanalabschnitten (114), die an den zumindest einen Halter (120) derart gekoppelt sind, dass jede Kanalunteranordnung (102) ein einheitliches Bündel von Kanalabschnitten (114) bildet, wobei die Kanalabschnitte (114) derart dimensioniert sind, dass ein Fluid und/oder eine elektrische Verdrahtung dadurch führbar ist, und derart angeordnet sind, dass offene Enden (116) von Kanalabschnitten (114) in benachbarten Kanalunteranordnungen (104, 106) koplanar ausgerichtet sind, wenn die Kanalunteranordnung (102) und die benachbarten Kanalunteranordnungen (104, 106) an ihren Enden aneinandergekoppelt sind,
wobei der zumindest eine Halter (120) einen ersten Halter (142) an einem ersten Ende (110) der Kanalunteranordnung (102) und einen zweiten Halter (144) an einem zweiten gegenüberliegenden Ende (112) der Kanalunteranordnung (102) umfasst.

2. Kanalunteranordnung (102) nach Anspruch 1, wobei der zumindest eine Halter (120) einen Sockelabschnitt (122), der sich im Wesentlichen quer relativ zu der Vielzahl von Kanalabschnitten (114) erstreckt, und zumindest einen Armabschnitt (128) aufweist, der sich in Richtung der Vielzahl von Kanalabschnitten erstreckt.

3. Kanalunteranordnung (102) nach einem der Ansprüche 1 bis 2, wobei zumindest ein Kanalabschnitt (114) in der Vielzahl von Kanalabschnitten einen entfernbaren Abschnitt (118) aufweist, der zum wahlweisen Entkoppeln von der Kanalunteranordnung eingerichtet ist.

4. Kanalunteranordnung (102) nach einem der Ansprüche 1 bis 3, wobei sich die Vielzahl von Kanalabschnitten (114) in einer im Wesentlichen parallelen Orientierung relativ zueinander erstrecken.

5. Kanalunteranordnung (102) nach einem der Ansprüche 1 bis 4, wobei die Vielzahl von Kanalabschnitten (114) einen ersten Kanalabschnitt (130), der an den zumindest einen Halter (120) gekoppelt ist, und einen zweiten Kanalabschnitt (132) aufweist, der an den ersten Kanalabschnitt (130) gekoppelt ist.

6. Kanalunteranordnung(100) nach einem der Ansprüche 1 bis 5, wobei der zumindest eine Halter (120) zumindest ein Montageloch (138, 140) aufweist, das zum Aufnehmen eines Montagestifts (154) dadurch dimensioniert ist, wobei vorzugsweise das zumindest eine Montageloch ein erstes Montageloch (138) an einem ersten Ende (124) des zumindest einen Halters (120) und ein zweites Montageloch (140) an einem zweiten Ende (126) des zumindest einen Halters aufweist, so dass der zumindest eine Halter zum freien Drehen um den Montagestift (154) eingerichtet ist, wenn er durch das erste Montageloch oder das zweite Montageloch eingeführt ist.

7. Kanalanordnung (100) zur Verwendung in einem Fahrzeug, wobei die Kanalanordnung eine Vielzahl von Kanalunteranordnungen (102) nach einem der Ansprüche 1 bis 6 aufweist, wobei die Kanalanordnungen mit ihren Enden seriell aneinander gekoppelt sind.

8. Kanalanordnung (100) nach Anspruch 2, wobei jede Kanalunteranordnung (102) das erste Ende (110) und das zweite Ende (112) aufweist, so dass das erste Ende einer ersten Kanalunteranordnung(104) an das zweite Ende einer zweiten Kanalunteranordnung (106) gekoppelt ist.

9. Verfahren zum Zusammenbauen einer Kanalanordnung (100) in einem Fahrzeug, wobei die Kanalanordnung (100) eine Vielzahl von Kanalunteranordnungen (102, 104, 106) umfasst, von denen jede zumindest einen Halter (120), der einen ersten Halter (142) an einem ersten Ende (110) der jeweiligen Kanalunteranordnung (102) und einen zweiten Halter (144) an einem zweiten gegenüberliegenden Ende (112) der jeweiligen Kanalunteranordnung (102) umfasst, und eine Vielzahl von Kanalabschnitten (114) aufweist, die an den zumindest einen Halter derart gekoppelt sind, dass jede Kanalunteranordnung ein einheitliches Bündel von Kanalabschnitten bildet, wobei die Kanalabschnitte (114) derart dimensioniert sind, dass ein Fluid und/oder eine elektrische Verdrahtung dadurch führbar ist, und die derart angeordnet sind, dass offene Enden (116) von Kanalabschnitten (114) in benachbarten Kanalunteranordnungen (104, 106) koplanar ausgerichtet sind, wenn die Kanalunteranordnung (102) und die benachbarten Kanalunteranordnungen (104, 106) mit ihren Enden aneinandergekoppelt sind, wobei das Verfahren aufweist:
Koppeln des zumindest einen Halters einer ersten Kanalunteranordnung(104) an ein Strukturglied (134) des Fahrzeugs; und
Ende-an-Ende-Koppeln einer zweiten Kanalunteranordnung(106) an die erste Kanalunteranordnung derart, dass die Vielzahl von Kanalabschnitten (114) in den ersten und zweiten Kanalunteranordnungen im Wesentlichen ausgerichtet sind.

10. Verfahren nach Anspruch 9, wobei ein Koppeln des zumindest einen Halters (120) aufweist:
Koppeln eines ersten Endes (124) des zumindest einen Halters an das Strukturglied (134);
Drehen der ersten Kanalunteranordnung (104) um einen Montagestift, der an dem ersten Ende definiert ist, so dass ein zweites Ende (126) des zumindest einen Halters benachbart zu dem Strukturglied positioniert ist; und
Koppeln des zweiten Endes des zumindest einen Halters an das Strukturglied.

11. Verfahren nach Anspruch 9 oder 10, wobei ein Koppeln des zumindest einen Halters (120) ein Koppeln des zumindest einen Halters an das Strukturglied (134) mit einem Montagestift (154) aufweist, derart dass der zumindest eine Halter frei um den Montagestift drehen kann.

12. Verfahren nach einem der Ansprüche 9 bis 11, wobei ein Koppeln einer zweiten Kanalunteranordnung(106) ein Koppeln des zumindest einen Halters (120) der zweiten Kanalunteranordnung an ein anderes Strukturglied des Fahrzeugs aufweist.

13. Verfahren nach einem der Ansprüche 9 bis 12, das ferner ein Ausrichten der ersten und zweiten Kanalunteranordnungen (104, 106) aufweist, derart dass die Vielzahl von Kanalabschnitten (114) sich im Wesentlichen linear entlang einer Länge des Fahrzeugs erstrecken.

## Revendications

1. Sous-ensemble de conduit (102, 104, 106) pour former un ensemble de conduit (100) pour l'utilisation dans un véhicule, ledit sous-ensemble de conduit (102) comprenant :
au moins une console (120) configurée pour s'accoupler à un organe structurel (134) du véhicule; et
une pluralité de portions de conduit (114) accouplées à ladite au moins une console (120) de telle sorte que chaque dit sous-ensemble de conduit (102) forme un faisceau unitaire de portions de conduit (114),
les portions de conduit (114) étant dimensionnées de telle sorte que du fluide et/ou un câblage électrique puissent être acheminés à travers elles et étant agencées de telle sorte que des extrémités ouvertes (116) de portions de conduit (114) dans des sous-ensembles de conduit adjacents (104, 106) soient alignées de manière coplanaire lorsque le sous-ensemble de conduit (102) et les sous-ensembles de conduit adjacents (104, 106) sont accouplés les uns aux autres bout-à-bout,
l'au moins une console (120) comportant une première console (142) à une première extrémité (110) du sous-ensemble de conduit (102) et une deuxième console (144) à une deuxième extrémité opposée (112) du sous-ensemble de conduit (102).

2. Sous-ensemble de conduit (102) selon la revendication 1, dans lequel ladite au moins une console (120) comprend une portion de base (122) s'étendant sensiblement transversalement par rapport à ladite pluralité de portions de conduit (114) et au moins une portion de bras (128) s'étendant vers ladite pluralité de portions de conduit.

3. Sous-ensemble de conduit (102) selon l'une quelconque des revendications 1 et 2, dans lequel au moins une portion de conduit (114) dans ladite pluralité de portions de conduit comprend une portion amovible (118) configurée pour se désaccoupler de manière sélective du sous-ensemble de conduit.

4. Sous-ensemble de conduit (102) selon l'une quelconque des revendications 1 à 3, dans lequel ladite pluralité de portions de conduit (114) s'étendent dans une orientation sensiblement parallèle les unes aux autres.

5. Sous-ensemble de conduit (102) selon l'une quelconque des revendications 1 à 4, dans lequel ladite pluralité de portions de conduit (114) comprend une première portion de conduit (130) accouplée à ladite au moins une console (120) et une deuxième portion de conduit (132) accouplée à ladite première portion de conduit (130).

6. Sous-ensemble de conduit (100) selon l'une quelconque des revendications 1 à 5, ladite au moins une console (120) comprenant au moins un trou de montage (138, 140) dimensionné de manière à recevoir à travers lui une tige de montage (154), de préférence ledit au moins un trou de montage comprenant un premier trou de montage (138) à une première extrémité (124) de ladite au moins une console (120) et un deuxième trou de montage (140) à une deuxième extrémité (126) de ladite au moins une console de telle sorte que ladite au moins une console soit configurée pour tourner librement autour de ladite tige de montage (154) lorsqu'elle est insérée à travers l'un desdits premier et deuxième trous de montage.

7. Ensemble de conduit (100) pour l'utilisation dans un véhicule, ledit ensemble de conduit comprenant une pluralité de sous-ensembles de conduit (102) selon l'une quelconque des revendications 1 à 6, les sous-ensembles de conduit étant accouplés bout-à-bout les uns aux autres en série.

8. Ensemble de conduit (100) selon la revendication 2, dans lequel chaque dit sous-ensemble de conduit (102) comprend la première extrémité (110) et la deuxième extrémité (112) de telle sorte que la première extrémité d'un premier sous-ensemble de conduit (104) soit accouplée à la deuxième extrémité d'un deuxième sous-ensemble de conduit (106).

9. Procédé pour assembler un ensemble de conduit (100) dans un véhicule, l'ensemble de conduit (100) comportant une pluralité de sous-ensembles de conduit (102, 104, 106) ayant chacun au moins une console (120) qui comporte une première console (142) à une première extrémité (110) du sous-ensemble de conduit respectif (102) et une deuxième console (144) à une deuxième extrémité opposée (112) du sous-ensemble de conduit respectif (102), et une pluralité de portions de conduit (114) accouplées à l'au moins une console de telle sorte que chaque sous-ensemble de conduit forme un faisceau unitaire de portions de conduit, les portions de conduit (114) étant dimensionnées de telle sorte que du fluide et/ou un câblage électrique puissent être acheminés à travers elles et étant agencées de telle sorte que des extrémités ouvertes (116) de portions de conduit (114) dans des sous-ensembles de conduit adjacents (104, 106) soient alignées de manière coplanaire lorsque le sous-ensemble de conduit (102) et les sous-ensembles de conduit adjacents (104, 106) sont accouplés les uns aux autres bout-à-bout, ledit procédé comprenant :
l'accouplement de l'au moins une console d'un premier sous-ensemble de conduit (104) à un organe structurel (134) du véhicule ; et
l'accouplement d'un deuxième sous-ensemble de conduit (106) bout-à-bout avec le premier sous-ensemble de conduit de telle sorte que la pluralité de portions de conduit (114) dans le premier et le deuxième sous-ensemble de conduit soient sensiblement alignées.

10. Procédé selon la revendication 9, dans lequel l'accouplement de l'au moins une console (120) comprend :
l'accouplement d'une première extrémité (124) de l'au moins une console à l'organe structurel (134) ;
la rotation du premier sous-ensemble de conduit (104) autour d'un point de montage défini au niveau de la première extrémité de telle sorte qu'une deuxième extrémité (126) de l'au moins une console soit positionnée à côté de l'organe structurel ; et
l'accouplement de la deuxième extrémité de l'au moins une console à l'organe structurel.

11. Procédé selon la revendication 9 ou 10, dans lequel l'accouplement de l'au moins une console (120) comprend l'accouplement de l'au moins une console à l'organe structurel (134) par une tige de montage (154) de telle sorte que l'au moins une console puisse tourner librement autour de la tige de montage.

12. Procédé selon l'une quelconque des revendications 9 à 11, dans lequel l'accouplement d'un deuxième sous-ensemble de conduit (106) comprend l'accouplement de l'au moins une console (120) du deuxième sous-ensemble de conduit à un autre organe structurel du véhicule.

13. Procédé selon l'une quelconque des revendications 9 à 12, comprenant en outre l'orientation du premier et du deuxième sous-ensemble de conduit (104, 106) de telle sorte que la pluralité de portions de conduit (114) s'étendent sensiblement linéairement le long d'une longueur du véhicule.
